# EUROPÄISCHE PATENTANMELDUNG

(11) **EP 3 626 861 A1**
(43) Veröffentlichungstag der Anmeldung: **25.03.2020**
(21) Anmeldenummer: 18195279.7
(22) Anmeldetag: 18.09.2018
(51) Int. Cl.: C25B 15/08, C25B 1/00, C25B 9/08, C25B 9/20

(54) **ELEKTROLYSEZELLE, ELEKTROLYSEUR UND VERFAHREN ZUR REDUKTION VON CO2**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Es wird eine Elektrolysezelle, ein Elektrolyseur und ein Verfahren zur elektrochemischen Reduktion von Kohlendioxid im technischen Maßstab beschrieben.

## Beschreibung

Die Erfindung beschreibt eine Elektrolysezelle, einen Elektrolyseur und ein Verfahren zur elektrochemischen Reduktion von Kohlendioxid im technischen Maßstab.

Die Herstellung von Grundchemikalien z. B. von Kohlenmonoxid, Methanol, Ethan, Propan, Formaldehyd oder auch Synthesegas erfolgt derzeit auch auf Basis von fossilen Rohstoffen. Aufgrund der Verknappung solcher Rohstoffe und der damit verbundenen CO₂ Emissionen, sind nachhaltige Synthesewege notwendig, um die fossilen Ressourcen wie z.B. Erdgas oder Erdöl zu schonen und die CO₂ Emission spätestens nach der stofflichen Verwertung am dem Ende des Lebenszyklus der aus den Grundchemikalien hergestellten Produkte durch Verbrennung freigesetzten CO₂ und der daraus resultierenden globalen Erderwärmung zu vermeiden.

Weiterhin ist es hilfreich CO₂ als Rohstoff für die Synthese einzusetzen. Dies vermeidet die Freisetzung von CO₂ aus verschiedenen Prozessen wie der Stahlerzeugung oder z.B. der Müllverbrennung. Dadurch könnte der Anstieg der globalen Erwärmung verlangsamt werden.

Durch Nutzung von regenerativ erzeugter Energie, z.B. aus Windenergie, Wasserkraft oder Solarkraftwerken besonders in Kombination mit Nutzung von CO₂ als Rohstoff stellt das neue Verfahren ein besonders nachhaltiges Verfahren dar.

Somit wären Elektrolyseverfahren besonders geeignet, die oben genannten Grundchemikalien nachhaltig herzustellen.

Da die Grundchemikalien typischerweise mindestens im 1000 Tonnen-Maßstab hergestellt werden, müssten die Elektrolyseverfahren unter Nutzung von CO₂ großskalig zur Verfügung gestellt werden. Um mit Elektrolyseverfahren großtechnischen Mengen an Produkten herzustellen, sind großflächige Elektrolysezellen und Elektrolyseure mit einer großen Anzahl von Elektrolysezellen notwendig. Unter technischen Produktionsmengen sind hier Mengen mit mehr als 0,1 kg CO₂/(h*m²) je Elektrolysezelle zu verstehen. Hierzu werden üblicherweise, wie z.B. aus der Chlor-Alkali-Elektrolyse bekannt, Elektrolysezellen mit einer Elektrodenfläche von mehr als 2m² je Elektrolysezelle eingesetzt. Die Elektrolysezellen werden in Gruppen von bis zu 100 Stücke in einem Getellrahmen zusammengefasst. Mehrere Gestellrahmen bilden dann einen Elektrolyseur. Die elektrochemische Umsetzung von CO₂ in einer Elektrolysezelle erfolgt dabei vorzugsweise an einer Gasdiffusionselektrode, die als Kathode geschaltet ist und kann grundsätzlich nach der beispielhaft im Folgenden genannten Reaktion durchgeführt werden:

CO₂ + H₂O + 2e⁻ → CO + 2OH⁻

Hierbei wird das CO₂ zu CO und Hydroxidionen umgesetzt, wobei in einer Nebenreaktion auch Wasserstoff erzeugt werden kann.

Allen bekannten Verfahren gemein ist, dass für die elektrochemische Umsetzung eine Gasdiffusionselektrode eingesetzt wird und für den Betrieb der Gasdiffusionselektrode eine Zellenkonstruktion in technischer Größe zur Verfügung stehen muss, in der die Gasdiffusionselektrode eingebaut und betrieben werden kann.

Technische Elektrolyseure, wie sie z.B. in der Chlor-Alkali-Elektrolyse eingesetzt werden, haben üblicherweise eine Elektrodenfläche von mehr als 1 m² je Elektrolysezelle. Über 100 Elektrolysezellen werden zu einem Elektrolyseur zusammengeschaltet. An einem Standort werden dann mehrere Elektrolyseure für die Produktion eingesetzt.

Der Betrieb von Gasdiffusionselektroden erfordert in technischen Elektrolysevorrichtungen besondere Maßnahmen.

So ist bei der technischen Nutzung von Gasdiffusionskathoden zu beachten, dass die hierfür verwendete Gasdiffusionselektrode (im weiteren auch kurz GDE genannt) eine offenporige Struktur aufweist und zwischen Elektrolytraum und Gasraum eingebaut wird. Die innere Struktur der GDE muss es ermöglichen, dass die Reaktion des Gases an der Dreiphasengrenze zwischen Elektrolyt, Katalysator und Gas möglichst nahe zum Elektrolyten hin erfolgt. Diese Grenzschicht wird durch die Hydrophobie des GDE Materials stabilisiert. Es zeigt sich jedoch, dass diese Stabilisierung, die durch die Oberflächenspannung des Elektrolyten an der Elektrodenoberfläche bedingt ist, nur ein endliches Druckgefälle zwischen Gasseite und Flüssigkeitsseite der GDE zulässt. Ist der gasseitige Druck zu hoch, so bricht schließlich das Gas durch die GDE hindurch und die GDE wird in diesem Bereich in ihrer Funktion gestört, d.h. der der Elektrolysevorgang wird hier lokal unterbrochen. Ist andererseits der Flüssigkeitsdruck zu hoch, so wird die Dreiphasengrenze aus dem Katalysatorbereich der GDE soweit verschoben, bis die GDE mit Elektrolyt geflutet wird und bei weiterer Druckerhöhung zu einem Flüssigkeitsdurchbruch von Elektrolyt in den Gasraum führt. Hierdurch wird ebenfalls die Funktion der GDE gestört und die gewünschte Reaktion findet nicht statt.

Bei senkrechter Elektrodenanordnung, die bei technisch durchgeführten Elektrolyseuren sinnvollerweise angewandt wird, führt dies zu einer Begrenzung der Bauhöhe der Elektrolysezelle aufgrund der Unzulänglichkeit von Gasdiffusionselektroden mit zu hohem Gasdruck oder Flüssigkeitsdruck betrieben zu werden. Eine typische technische Bauhöhe für die Elektrode einer Elektrolysezelle beträgt mehr als 30 cm, üblicherweise etwa 100 bis 150 cm. Hier würde im Falle einer Membranelektrolyse bereits bei einer Bauhöhe von mehr als 10 cm im oberen Bereich der Elektrolysezelle Gas aus dem Gasraum in den Kathoden-Elektrolytspalt zwischen GDE und Membran eindringen. Die technisch realisierbare Bauhöhe bliebe deshalb auf ca. 20 bis 30 cm beschränkt, was für die derzeit marktübliche Elektrolyseure keine technisch wirtschaftliche Nutzung erlauben würde.

Für die technische elektrochemische Reduktion von CO₂ sind bisher noch keine Zellkonzepte für den technischen Maßstab beschrieben und verfügbar. Erste Versuche wurden stets nur im kleinen Laborzellenmaßstab durchgeführt, wobei die Bauhöhe weniger als 10 cm beträgt und somit das Problem der Bauhöhe und die Druckverhältnisse zwischen dem Gasraum und dem Elektrolytraum noch keine Rolle spielen.

Aufgabe der vorliegenden Erfindung war es daher, eine Vorrichtung und ein Verfahren zum Betrieb einer Gasdiffusionselektrode im technischen Maßstab bereit zu stellen, bei dem an der GDE CO₂ umgesetzt wird. Unter technischem Maßstab sind dabei Produktionsmengen zu verstehen, bei dem elektrochemisch mehr als 0,1 kg CO₂ / h*m² umgesetzt werden.

Die elektrochemische CO₂ Reduktion zu CO bzw. zu CO/H₂ Gemischen unterscheidet sich grundlegend von der aus der Chlor-Alkali-Membranelektrolyse grundsätzlich bekannten elektrochemischen O₂ Reduktion an Gasdiffusionselektroden. Bei der O₂ Reduktion werden aus dem Gas Sauerstoff Hydroxid-Ionen gebildet, somit findet eine Volumenverminderung statt. Die GDE verbraucht den Sauerstoff, wodurch eine Verringerung des Partialdrucks entsteht. Bei der CO₂ Reduktion zu CO/H₂ entsteht jedoch die äquimolare Gasmenge an Produkt (CO bzw. CO/H₂) aus dem CO₂ Gas, somit findet keine Verringerung des Partialdrucks statt. Dies bedarf einer speziellen Betriebsweise, insbesondere auf der Kathodenseite der Elektrolysezelle.

Bisher sind wie bereits erwähnt keine technischen Elektrolyseverfahren und -vorrichtungen bekannt, mit denen großtechnische Mengen an CO aus CO₂ herstellbar sind.

Gegenstand der Erfindung durch die die oben beschriebene technische Aufgabe gelöst wird, ist eine Elektrolysezelle zur elektrochemischen Umsetzung von CO₂ im technischen Maßstab wenigstens umfassend eine Kathodenhalbschale mit einer Kathode, mit einem Gasraum verbunden mit einer ersten Gaszuleitung für Kohlendioxidgas und mit einer ersten Gasableitung für gasförmige Reaktionsprodukte, insbesondere für Kohlenmonoxid, Wasserstoff und unverbrauchtes Kohlendioxidgas, und mit einem Katholytzulauf und einem Katholytablauf weiter umfassend eine Anodenhalbschale mit einer Anode und einen zwischen Anodenhalbschale und Kathodenhalbschale angeordneten Separator zur Trennung von Anodenraum und Kathodenraum, wobei die Anodenhalbschale mindestens mit einer zweiten Gasableitung für das Anodenreaktionsprodukt, insbesondere Sauerstoff und gegebenenfalls Kohlendioxid, einem Anolytzulauf und einem Anolytablauf sowie einer Anode versehen ist, weiter umfassend elektrische Stromleitungen zur Verbindung der Anode und elektrische Stromleitungen zur Verbindung der Kathode mit einer Gleichspannungsquelle, dadurch gekennzeichnet, dass die Kathode als Gasdiffusionselektrode zur Umsetzung von Kohlendioxidgas ausgebildet ist und Kathode, Anode und der Separator mit ihrer Hauptausdehnung vertikal angeordnet sind, und zwischen Separator und Kathode ein Spalt zur Durchleitung des Katholyts nach dem Prinzip eines fallenden Flüssigkeitsfilms angeordnet ist.

In einer bevorzugten Ausführung der Erfindung ist der Separator eine Ionenaustauschermembran oder ein Diaphragma, besonders bevorzugt ist der Separator eine Ionenaustauschermembran.

Als Ionenaustauschermembran sind insbesondere Membranen geeignet, die als Kationenaustauschermembranen ausgeführt sind und Kationen vom Anodenraum in den Kathodenraum leiten können. Diese sind aus dem Stand der Technik grundsätzlich bekannt. Alternativ können grundsätzlich auch Anionenaustauschermembranen eingesetzt werden, die Anionen aus dem Kathodenraum in den Anodenraum transportieren. Bevorzugt werden Kationenaustauschermembranen eingesetzt. Der Ionentransport ist bei üblichen Ionenaustauschermembranen auch mit einem Wassertransport verbunden, der von den gewählten Konzentrationen des Anolyt und Katholyts, Temperatur und Betriebsbedingungen abhängt.

Als Diaphragma sind insbesondere alle grundsätzlich bekannten Diaphragmen geeignet, die den Anodenraum vom Kathodenraum, speziell von dem Kathodenspalt gasdicht trennen. Hierbei sollte das Diaphragma insbesondere eine Gasdichtigkeit (Bubble point) von mehr als 10 mbar aufweisen, vorzugweise mehr als 300 mbar, besonders bevorzugt mehr als 1000 mbar. Insbesondere sollte das Diaphragma weiterhin gegenüber dem Elektrolyten und den Reaktionsgasen inert und bei den Betriebstemperaturen beständig sein. Diaphragmen für die Elektrolyse sind aus dem Stand der Technik grundsätzlich bekannt.

Die Elektrolysezelle ist für die Elektrolyse im technischen Maßstab bestimmt, was insbesondere bedeutet, dass die Bauhöhe der Elektrolysezelle mindestens 30 cm beträgt und sich damit von Labor- und Versuchszellen wesentlich unterscheidet.

Die Hauptkonsequenz ist, dass bei einer solchen Bauhöhe Maßnahmen zur Verhinderung von Durchtritt von Katholyt als auch Gas durch die Gasdiffusionselektrode getroffen werden müssen.

In einer bevorzugten Ausführung beträgt die vertikale Hauptausdehnung der Kathode also mindestens 30 cm, bevorzugt mindestens 60 cm, besonders bevorzugt mind. 100 cm. Mit dem Betrieb der Elektrolysezelle nach dem Prinzip eines fallenden Flüssigkeitsfilms (Katholyt) im Kathodenraum wird eine solche Bauhöhe ermöglicht, ohne dass es zu Katholytdurchtritt oder Gasdurchtritt durch die Gasdiffusionselektrode kommt.

Als Kathode wird besonders bevorzugt eine Gasdiffusionselektrode eingesetzt, die einen Elektrokatalysator zur CO₂ Reduktion enthält, der insbesondere hergestellt ist auf Basis von Silber und/oder Silberoxid, bevorzugt auf Basis von Silberpartikeln als Elektrokatalysator, und mit einem pulverförmigen Fluorpolymer, insbesondere PTFE Pulver, als nichtleitendes Bindemittel auf einem metallischen oder nichtmetallischen, leitfähigen oder nichtleitfähigen Träger kompaktiert aufgebracht ist. Bevorzugt ist ein metallischer, leitfähiger Träger zur Kompaktierung eingesetzt.

Anstelle von pulverförmigen Fluorpolymeren kommen auch grundsätzlich andere Polymerpulver mit vergleichbaren Eigenschaften (d.h. insbesondere inert gegenüber Elektrolyt bei Reaktionstemperatur und hoher Stromdichte und verarbeitbar bei der Herstellung der GDE sind) in Frage, insbesondere Polyalkylene, besonders bevorzugt Polyethylen, Polypropylen oder teilfluorierte Polymere.

In einer anderen bevorzugten Ausführung der neuen Elektrolysezelle ist im Spalt zwischen Membrane und GDE ein Mittel zur Strömungsbremsung des Katholytstroms, nachfolgend Strömungsbremse genannt, vorgesehen. Hiermit kann die Verweilzeit des Katholyts im Spalt vor der Kathode gesteuert werden. Die Strömungsbremse ist besonders bevorzugt als elektrisch nicht leitendes, inertes textiles Flächengebilde, ausgebildet.

Die Strömungsbremse kann insbesondere aus einem porösen textilen Flächengebilde, insbesondere bevorzugt einem Gewebe, Gestrick oder Gewirk, bestehen, das im Spalt angeordnet wird. Denkbar sind als Alternative auch mechanische Einbauten im Spalt, die eine horizontale oder zur Horizontalen leicht angewinkelte Elektrolytführung ermöglichen, sodass ein mäandrierender Fluss des Elektrolyts resultiert. Der Werkstoff, aus dem die Strömungsbremse besteht, kann grundsätzlich hydrophil sein, wie z.B. die aus der WO2003042430A2, Beispiel 1 bekannte Strömungsbremse oder hydrophob je nach Wahl der Strömungsverhältnisse oder der Viskosität des Katholyts. Die bevorzugten Werkstoffe sind oben beschrieben.

Um zu gewährleisten, dass der Spalt immer ausreichend mit Elektrolyt versorgt wird, kann die Zuführung des Katholyts bevorzugt über einen Verteilerkanal erfolgen, der die Katholyt-Zuleitung mit dem Spalt verbindet. Zur Sicherstellung, dass der Verteilerkanal immer mit Elektrolyt gefüllt ist, kann dieser einen Überlauf (in den Figuren nicht gezeichnet) aufweisen, über den ggf. überschüssig zugeführter Elektrolyt abgeführt werden kann.

Die Gasdiffusionselektrode dichtet hierbei insbesondere den Verteilerkanal und den Spalt vom Gasraum gasdicht ab.

Die Kontaktierung der Gasdiffusionselektrode (GDE) mit der Stromzuleitung im Kathodenraum erfolgt bevorzugt zweckmäßigerweise über eine elastisch gelagerte elektrisch leitende Struktur. Diese kann so ausgeführt werden, das eine steife Struktur z.B. in Form eines Streckmetalls auf Federn gelagert die GDE von der Seite des Gasraumes her elektrisch kontaktiert. Zur Aufrechterhaltung der Abmessungen des Spaltes zwischen GDE und Separator bei einer Druckbelastung z. B. durch die elektrische Kontaktierung werden insbesondere Abstandshalter in den Spalt zwischen Separator und GDE eingebaut. Die Funktion des Abstandshalters kann auch die Strömungsbremse übernehmen, wenn diese über eine ausreichende mechanische Stabilität und Steifigkeit bei Druckbelastung auf ihrer Fläche verfügt.

In einer bevorzugten Ausführung der neuen Elektrolysezelle sind die zweite Gasableitung für das Anodenreaktionsprodukt am oberen Ende des Anodenraums, die erste Gasableitung für gasförmige Reaktionsprodukte, insbesondere für Kohlenmonoxid, Wasserstoff und unverbrauchtes Kohlendioxidgas, am oberen Ende des Gasraums angeschlossen und die Gaszuleitung für Kohlendioxid ist am unteren Ende des Gasraums angeschlossen. Das Einleiten des Kohlendioxids kann bevorzugt über einen innerhalb der Elektrolysezelle liegenden Gas-Verteilerkanal, z.B. eine Rohrleitung mit einer Vielzahl von Bohrungen als Gaseinlässe, erfolgen, so dass die Elektrodenfläche über die Breite der Elektrolysezelle gleichmäßig mit Kohlendioxid versorgt und die Reaktionsprodukte abgeführt werden können.

Die Menge an CO₂, die der Kathodenhalbschale zugeführt wird, beträgt mindestens das 0,5 fache der gemäß dem elektrischen Strom fließenden Ladungsmenge, berechnet nach obiger Reaktionsgleichung. Unterstöchiometrische CO₂ Mengen werden dann benötigt, wenn bewusst mehr Wasserstoff erzeugt werden soll. Wenn die Produktion von Wasserstoff vermieden werden soll, wird CO₂ im Überschuss zugeführt. Dabei beträgt die Menge an CO₂ bevorzugt ein mehrfaches der nach dem fließenden elektrischen Strom benötigten stöchiometrischen Menge. Es werden insbesondere 0,5% bis 800% mehr an CO₂ zugegeben, als stöchiometrisch benötigt wird.

In einer weiteren bevorzugten Variante der neuen Elektrolysezelle ist die zweite Gasableitung mit einer Trennvorrichtung zur Abtrennung von Kohlendioxid aus Sauerstoff verbunden und die Trennvorrichtung über eine Kohlendioxidleitung mit der Gaszuleitung verbunden um abgetrenntes Kohlendioxid zur Elektrolysezelle rückführen zu können. Der abgetrennte Sauerstoff kann aufgrund seiner Reinheit direkt einer weiteren Verwendung für andere chemische Reaktionen zugeführt werden.

In einer bevorzugten Ausführung der Elektrolysezelle für die Reduktion von CO₂ zu CO wird als Katholyt eine wässrige Lösung von Alkalihydrogencarbonat, bevorzugt Kaliumhydrogencarbonat, Caesiumhydrogencarbonat oder Natriumhydrogencarbonat, besonders bevorzugt Kaliumhydrogencarbonat verwendet.

Unabhängig hiervon wird in einer weiteren bevorzugten Ausführung der Elektrolysezelle als Anolyt eine wässrige Lösung von Alkalihydrogencarbonat, bevorzugt Kaliumhydrogencarbonat, Caesiumhydrogencarbonat oder Natriumhydrogencarbonat, besonders bevorzugt Kaliumhydrogencarbonat verwendet. Zweckmäßigerweise haben die Salze in Anolyt und Katholyt insbesondere gleiche Kationen.

Zur Erhöhung der Leitfähigkeit können unabhängig voneinander sowohl dem Anolyt als auch dem Katholyt Leitsalze, vorzugsweise mit gleichen Kationen, zugegeben werden, welche gegenüber der Anodenreaktion bzw. der Kathodenreaktion inert sind, z. B. Alkalisulfate, oder Alkalihydrogensulfate, insbesondere wahlweise Kalium-, Caesium- oder Natriumsulfat oder - hydrogensulfat, besonders bevorzugt Kaliumhydrogensulfat. Die Konzentration der Salze beträgt in Summe bevorzugt 0,1 bis 2 mol pro L, wobei insbesondere Elektrolyte mit einer Leitfähigkeit bei 25°C von größer als 10 S/m eingesetzt werden (S steht für Siemens und m für Meter).

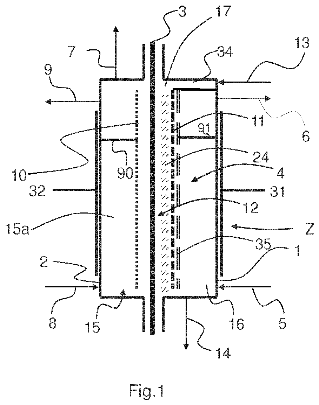

In einer besonders bevorzugten Variante der neuen Elektrolysezelle sind, im Falle der Verwendung des gleichen Elektrolytsalzes für Anolyt und Katholyt, der Katholytablauf am unteren Ende des Spaltes angebracht und der Katholytzulauf oberhalb des Spaltes an der Kathodenhalbschale angebracht und der Katholytablauf ist mit einer Katholytsammelrohrleitung verbunden, in der Katholyt aus dem Katholytablauf der Elektrolysezellen vereinigt wird. Der Anolyt aus dem Anolytablauf der Elektrolysezellen wird in einem Sammelrohr für Anolyt zusammengeführt (siehe z. B. Fig. 1).

Bevorzugt ist folglich eine Elektrolysezelle, die dadurch gekennzeichnet, dass im Falle der Verwendung des gleichen Elektrolytsalzes für Anolyt und Katholyt der Katholytablauf am unteren Ende des Spaltes und der Katholytzulauf oberhalb des Spaltes an der Kathodenhalbschale angebracht ist und der Katholytablauf, im Falle von mehreren Katholytabläufen aus weiteren bevorzugt über eine Sammelrohrleitung, mit einer Elektrolytsammelvorrichtung verbunden ist, in der Katholyt aus dem Katholytablauf und Anolyt aus dem Anolytablauf vereinigt werden. Besonders bevorzugt ist im Falle mehrerer Anolytabläufe zwischen Anolytablauf und Elektrolytsammelvorrichtung auch ein Sammler geschaltet.

Bevor der Katholyt und der Anolyt mit einander vereinigt werden, werden bevorzugt beide Lösungen jeweils einer Gasabtrennungseinheit zugeführt. Hierbei wird im Elektrolyt gelöstes und dispergiertes Gas abgetrennt. Der Anolyt wird somit im Wesentlichen von Sauerstoff befreit, der Katholyt von Kohlenmonoxid und Wasserstoff. Somit wird vermieden, dass Anolyt mit CO₂ haltigem Sauerstoff mit Katholyt mit CO/H₂ haltigem Gas vermischt wird und sich explosive Gasgemische bilden. Die von Gasen befreiten Elektrolyte: Anolyt und Katholyt können dann vereinigt werden.

Zur Einstellung der vorgegebenen Zulauftemperaturen der Elektrolyte zum Anodenraum bzw. Kathodenraum können die Elektrolyte bedarfsweise mittels Wärmetauschern aufgeheizt oder auch gekühlt werden. Zur ggf. Einstellung der Konzentration des Elektrolyten können entsprechende Mengen an Elektrolytsalz oder Wasser zugegeben werden. Ebenfalls können konzentriertere oder verdünntere Elektrolytlösungen zur Einstellung der gewünschten Eingangskonzentration in die Elektrolysezelle zugegeben werden

In einer weiteren bevorzugten Ausführung der neuen Elektrolysezelle ist die erste Gasableitung, insbesondere über eine Sammelleitung, die die erste Gasableitung der Elektrolysezelle mit weiteren gleichen Gasableitungen anderer Elektrolysezellen verbindet, mit einer Gastrenneinheit zur Trennung von Kohlenmonoxid, Wasserstoff und unverbrauchtem Kohlendioxidgas verbunden.

Bevorzugt weist in dieser speziellen Ausführung der neuen Zelle die Gastrenneinheit eine Rückführungsleitung für abgetrenntes Kohlendioxidgas auf, die mit der ersten Gaszuleitung für Kohlendioxidgas und dem Gasraum verbunden ist. Insbesondere ist dabei eine Verteilerrohrleitung zwischengeschaltet, die die Rückführungsleitung mit der ersten Gaszuleitung für Kohlendioxidgas der Elektrolysezelle und mit weiteren gleichen ersten Gaszuleitungen anderer Elektrolysezellen verbindet.

Weiter bevorzugt weist die Gastrenneinheit eine Ableitung für abgetrenntes Kohlenmonoxid auf, die mit einer chemischen Produktionsanlage zur chemischen Umsetzung von Kohlenmonoxid zu chemischen Zwischenprodukten verbunden ist. Alternativ kann das abgetrennte Kohlenmonoxid einer Sammelleitung bzw. einem Speicher zur Weiterverwendung zugeleitet werden.

Typische Zwischenprodukte sind beispielsweise Phosgen, Isocyanate oder Bisphenole zur Herstellung von technischen Polymeren, insbesondere von Polyurethanen oder Polycarbonaten.

Weiter bevorzugt weist die Gastrenneinheit eine Ableitung für abgetrennten Wasserstoff auf, die wiederum mit einem Wasserstoffrohrnetz oder einer Abfüllanlage für Wasserstoff verbunden ist.

In einer bevorzugten Ausführung der Erfindung ist die zweite Gasableitung für das Anodenreaktionsprodukt mit einer zweiten Gastrenneinheit zur Abtrennung von Kohlendioxid aus Sauerstoff verbunden und die zweite Gastrenneinheit über eine Kohlendioxidleitung, und ggf. über eine Verteilerrohrleitung, mit der Gaszuleitung verbunden.

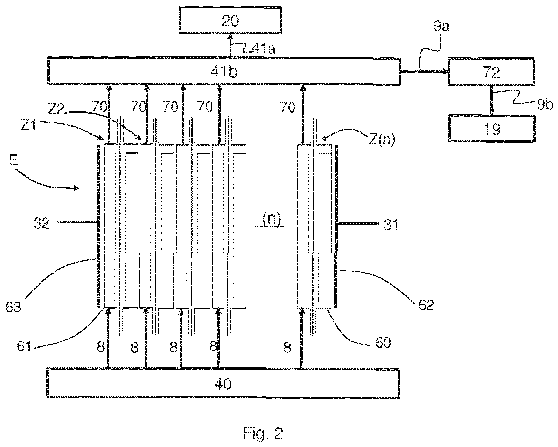

In einer weiteren besonders bevorzugten Variante (siehe z. B. Fig. 2) der Elektrolysezelle bilden die zweite Gasableitung für das Anodenreaktionsprodukt, und der Anolytablauf eine Einheit und sind mit einer Gas-/Flüssigkeitstrennung, einer äußeren Sammelrohrleitung verbunden. Die Gas-/Flüssigkeitstrennung trennt das Gasgemisch aus CO₂ und O₂ vom Elektrolyten ab. Der Anolyt wird der zweite Gasabtrennungseinheit zugeführt und das Gas der zweiten Gastrenneinheit von CO₂ und O₂. Der Elektrolyt aus der Elektrolytsammelvorrichtung wird dann dem Anolytzulauf über die äußere Verteilerrohrleitung Anolyt wieder zugeführt.

In einer weiteren besonders bevorzugten Variante der Elektrolysezelle weist die Elektrolyt-Rückführungsleitung (wahlweise für Katholyt und/oder Anolyt) eine Zuleitung für die Zumischung von wahlweise Wasser oder höher konzentriertem Elektrolyt und eine Mischungseinheit für die Vermischung des abgereicherten Elektrolyts (z.B. des Anolyts) mit höher konzentriertem Elektrolyt auf oder je nach Bedarf für die Zumischung von Wasser oder von niedrig konzentriertem Elektrolyt.

Als bevorzugter Werkstoff zur Konstruktion der Kathodenhalbschale haben sich Nickel bzw. Nickellegierungen erwiesen. In einer besonders bevorzugten Ausführung der Elektrolysezelle bestehen jedoch alle Elektrolyt-berührten Teile in der Elektrolysezelle aus Nickel und weisen eine Anlaufkorrosionsschutzschicht aus Gold auf. Es ist auch grundsätzlich denkbar bei einer Betriebstemperatur unter 90°C alternativ inerte Kunststoffe als Konstruktionswerkstoffe bzw. Werkstoff für die Innenbeschichtung der Kathodenseite der Zelle einzusetzen, soweit diese unter der gegebenen Temperatur gegen die Elektrolyte und Gase chemisch beständig sind.

Als bevorzugter Werkstoff zur Konstruktion der Anodenhalbschale werden Nickel bzw. Nickellegierungen, Titan oder Titanlegierungen eingesetzt. Alle Elektrolyt-berührten Teile in der Elektrolysezellen können auch im Bereich der Anodenhalbschale besonders bevorzugt eine Anlaufkorrosionsschutzschicht aus Gold aufweisen. Ebenfalls können alternativ auch hier inerte Kunststoffe mit ausreichender Temperaturbeständigkeit sowie mechanischer Beständigkeit als Konstruktionswerkstoffe bzw. Werkstoff für die Innenbeschichtung der Anodenseite der Elektrolysezelle eingesetzt werden.

Weiterer Gegenstand der Erfindung ist ein Elektrolyseur zur elektrochemischen Umsetzung von CO₂ im technischen Maßstab nach dem Membranelektrolyseverfahren oder Diaphragmaelektrolyseverfahren, dadurch gekennzeichnet, dass der Elektrolyseur eine Vielzahl von erfindungsgemäßen Elektrolysezellen aufweist, die bipolar mit einander elektrisch verschaltet sind.

Der Elektrolyseur wird besonders bevorzugt so ausgeführt, dass die einzelnen Elektrolysezellen bipolar miteinander verbunden sind und die Endelemente mit Stromzuführ- bzw. Stromabfuhrplatten versehen sind.

Bevorzugt sind die Anschlüsse der Anolyt- bzw. Katholytzuleitungen und die entsprechenden Elektrolyt-Ableitungen der einzelnen Elektrolysezellen über äußere Verbindungsrohrleitungen mit Verteilern bzw. Sammlern miteinander verbunden. Eine weitere bevorzugte Ausführung des neuen Elektrolyseurs ist dadurch gekennzeichnet, dass zur Verbindung der Zu- und Ableitungen der mehreren Elektrolysezellen untereinander Sammler für Anolyt, Sammler für Katholyt, Verteiler für Anolyt, Verteiler für Katholyt und Gasverteiler für Reaktionsgas und Gassammler für Produktgase vorgesehen sind. Es werden insbesondere die Zuleitungen von mindestens 10 Elektrolysezellen in einem Verteiler verbunden und insbesondere die Ableitungen von mindestens 4 Elektrolysezellen in einem Sammler verbunden. So erfolgt die Anolytzuführung (siehe z. B. Fig. 2) über eine Verteilerrohrleitung für den Anolyten. Von diesen Verteilerrohrleitungen wird der Anolyt über eine insbesondere flexible Verbindung, z.B. einen Schlauch den damit verbundenen Elementen jeweils dem Anodenraum zugeführt. Der aus dem Anodenraum herausgeführte Anolyt und das hierin erzeugte Gas (Hauptbestandteil Sauerstoff und Kohlendioxid) wird wieder einer Sammelrohrleitung zugeführt. Diese äußere Sammelrohrleitung kann als Gas-/ Flüssigkeitstrenner fungieren, so dass Gas über eine weitere separate Leitung einer optionalen zweiten Gastrenneinheit zur Trennung von Sauerstoff und Kohlendioxid zugeführt werden kann. Aus der Verbindungsrohrleitung wird der Anolyt der zweiten Gastrenneinheit und danach der Elektrolytsammelvorrichtung zugeführt.

Die Zuführung des Katholyten erfolgt insbesondere über eine äußere Verteilerrohrleitung. Von dieser äußeren Verteilerrohrleitung wird der Katholyt über eine insbesondere flexible Verbindung, z.B. einen Schlauch den damit verbundenen Elektrolysezellen und an diesen insbesondere jeweils dem inneren Verteilerkanal der Kathode zugeführt. Der aus dem Spalt ablaufende Katholyt wird wieder einer äußeren Sammelrohrleitung über den Ablauf zugeführt. Zur Vermeidung, dass über den Ablauf Gas aus dem Kathodenraum in die äußere Sammelrohrleitung gelangt, wird der Ablauf insbesondere so ausgeführt, dass dieser in Elektrolyt eintaucht, welcher sich in der Sammelrohrleitung befindet und somit einen Verschluss bildet.

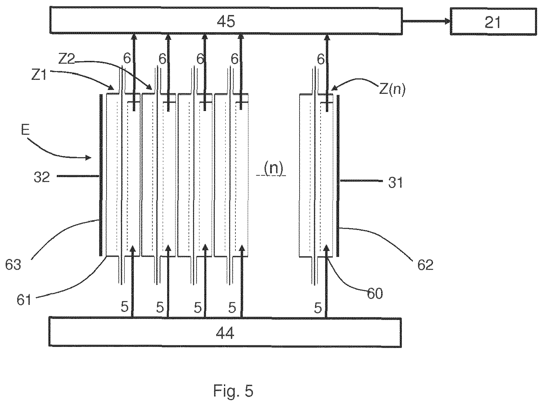

Die Zuführung des Gases zum Kathodenraum (siehe z. B. Fig. 5) erfolgt bevorzugt über eine äußere Verteilerrohrleitung. Von dieser äußeren Verteilerrohrleitung wird das Gas über eine Verbindung zu den damit verbundenen Kathoden über die Gaszuführung zugeführt. Die Verbindung von der Kathodenhalbzelle zu der Verteilerrohrleitung kann z.B. über einen flexiblen Schlauch erfolgen. Innerhalb der Elektrolysezelle kann das Gas in einer besonders bevorzugten Ausführung über ein Verteilersystem über die Breite des Elektrolysezelle verteilt werden, so dass eine gleichmäßige Strömung des Gases von unten nach oben erfolgt und die GDE mit ausreichender Menge an Kohlendioxidgas versorgt werden kann. Um das Gas im Gasraum der GDE zuzuführen, können im Gasraum Einbauten erfolgen, die eine Verwirbelung des Gasstromes ermöglichen. Ebenso wird hierüber gewährleistet, dass die Reaktionsprodukte und überschüssiges unreagiertes Kohlendioxidgas wieder aus der Elektrolysezelle herausgeleitet wird. Das Gas aus dem Gasraum gelangt über den Auslass wieder in eine äußere Sammelrohrleitung. Die Verbindung zwischen Kathodenauslass und Sammelrohrleitung kann wieder über eine Schlauch erfolgen. Das Gas aus der äußeren Sammelrohrleitung wird einer Gastrennung zur Trennung von CO, H₂ und nicht umgesetztem CO₂ zugeführt. Abgetrenntes CO₂-Gas aus der Gastrenneinrichtung wird zusammen mit frischem Kohlendioxidgas wieder über die äußere Verteilerrohrleitung dem Kathodenraum zugeführt.

Die neuen Elektrolysezellen werden bevorzugt bei einem Absolutdruck im Bereich von 900mbar (900 hPa) bis 2000 mbar (2000 hPa) betrieben.

Als Gasdiffusionselektrode wird für die Reduktion von CO₂ zu CO besonders bevorzugt eine silberbasierte GDE eingesetzt. insbesondere bevorzugt wird eine silberbasierte GDE eingesetzt, die gefertigt ist gemäß den Maßgaben, die in der Offenlegungsschrift EP 1728896 grundsätzlich offenbart sind, besonders bevorzugt gemäß den darin beschriebenen Beispielen. Die Porosität der katalytisch aktiven Schicht, berechnet aus den Mengen und den Materialdichten der eingesetzten Rohstoffe im Verhältnis zum Volumen der Elektrode berechnet aus den geometrischen Ausmaßen von Fläche und Dicke, abzüglich des Trägervolumens, soll aber besonders bevorzugt mehr als 10%, jedoch insbesondere weniger als 80% betragen.

Zur Vermeidung von unerwünschten Auftriebseffekten durch die leichten Produktgase CO und Wasserstoff wird dem Gasraum bevorzugt Kohlendioxid so zugeführt, dass eine Gasgeschwindigkeit nahe der Rückseite der Gasdiffusionselektrode von 0,001 bis 15 m/s, bevorzugt von 0,01 bis 10 m/s entsteht. Die Gasgeschwindigkeit berechnet sich aus dem Volumenstrom des zugegebenen Gases oder Gasmischung und der Fläche, die sich aus dem Abstand der GDE zum Separator multipliziert mit der Spaltbreite ergibt. Im Falle einer Gasmengeneinstellung wäre darauf zu achten, dass mindestens die 0,5 fache stöchiometrisch benötige CO₂ Menge berechnet nach dem fließenden elektrischen Strom und der sich daraus ergebenden Ladungsmenge nicht unterschritten wird.

Die Gasgeschwindigkeit wird bevorzugt konstruktiv im oben definierten Bereich von 0,001 bis 15 m/s, bevorzugt von 0,01 bis 10 m/s gehalten. Dies kann z. B. so erfolgen, dass der Gasraum im Bereich zwischen Gasdiffusionselektrode und Stützstruktur für die Gasdiffusionselektrode möglichst eng gehalten wird. Bei technischen Elektrolysezellen sollte der Abstand der Gasdiffusionselektrode zur Kathodenrückwand daher höchstens 5 cm, bevorzugt höchstens 4 cm, besonders bevorzugt höchstens 2 cm betragen. Auch sind strömungsführende Einbauten im Bereich zwischen Gasdiffusionselektrode und Stützstruktur für die Gasdiffusionselektrode zur Verhinderung von unerwünschten Schloteffekten denkbar. Weiterhin sind auch Einbauten im Bereich zwischen Gasdiffusionselektrode und Stützstruktur möglich, die den Gasstrom verwirbeln. Dies kann z.B. durch den Einbau von porösen Strukturen wie Metall- oder Kunststoffschäumen oder Gewirken, Geflechten oder Geweben erfolgen.

Als Träger zur Fertigung der GDE werden bevorzugt vergoldete Nickel-Netze, Silber-Netze, PTFE-beschichtete Glasfaser-Träger, C-Faser-Gewebe oder C-basierte Gewirke / Strukturen sowie Träger basierend auf Polymeren wie z.B. Polypropylen oder Polyethylen eingesetzt.

Die Trennung von Anoden- und Kathodenkammer mittels des Separators dient der Vermeidung der Vermischung der Elektrolyte und der Vermeidung des elektrochemischen Kurzschlusses. Das anodisch gebildete Gas könnte ohne Separator direkt an der Kathode wieder reduziert werden, wodurch ein elektrochemischer Kurzschluss entstünde, die Stromausbeute verringert und die Wirtschaftlichkeit des Verfahrens verschlechtert würde. Weiterhin könnte der an GDE gebildete Wasserstoff und/oder Kohlenmonoxid mit dem anodisch gebildeten Sauerstoff explosive Gasmischungen bilden.

Wird als Separator gemäß einer bevorzugten Ausführungsform der Elektrolysezelle eine Ionenaustauschermembran eingesetzt, können grundsätzlich bekannte Kationenaustauschermembranen wie fumasep F 1075-PK (Hersteller: Fumatech GmbH) der Typ Nafion N 324 (Hersteller Chemours Company) insbesondere Nafion N324 bevorzugt verwendet werden.

Wird als Separator gemäß einer bevorzugten Ausführungsform der Elektrolysezelle ein Diaphragma eingesetzt, können grundsätzlich bekannte Diaphragmen für die Elektrolyse verwendet werden, beispielsweise wird insbesondere das aus PFTE und Zirkondioxid aufgebaute Diaphragma vom Typ Zirfon™ Pearl (Hersteller Agfa) verwendet.

Die Elektrolysezelle ist zweckmäßigerweise insbesondere so aufgebaut, dass der Separator auf der Anode direkt aufliegt. Die Anode ist dabei elektrisch leitend mit der Anodenhalbschale verbunden. Die Anode ist dabei bevorzugt so ausgeführt, dass sie Hohlräume aufweist, die so geformt sind, dass das an der Anode gebildete Gas (z. B. Sauerstoffgas) auf die dem Separator abgewandte Rückseite der Anode leitet. Als Anodenstruktur kann entweder beispielsweise ein Streckmetall eingesetzt werden, oder andere aus dem Stand der Technik grundsätzlich bekannte Anodenstrukturen. Eine bevorzugte Ausführung der neuen Elektrolysezelle ist noch dadurch gekennzeichnet, dass die Anode an dem Separator mit punkt-, linien- oder flächenförmigen Kontaktstellen der Anode aufliegt. Hierdurch wird es möglich die Gase, die an der Anode entwickelt werden, der dem Separator abgewandten Rückseite der Anode zuzuführen. Gas, das sich zwischen Anode und Separator befindet verursacht unter Umständen eine erhöhte Elektrolysespannung, die den Elektrolyseprozess bzgl. die Wirtschaftlichkeit des Elektrolyseprozesses verschlechtert. Weiterhin wird durch die Auflage des Separators auf der Anode eine Beschädigung des Separators während des Betriebes vermieden. Durch die Gasentwicklung kann es zu Druckschwankungen kommen, wodurch der Separator während der Elektrolyse hin und her bewegt wird, welches auf Dauer zu einer mechanischen Beschädigung mit der Folge eines Risses und damit einer fehlenden Gas- und Flüssigkeitstrennwirkung kommt.

Der Differenzdruck mit dem der Separator auf die Anode gedrückt wird, beträgt in einer solchen bevorzugten Ausführung der Erfindung mindestens 10 mbar.

Weiterer Gegenstand der Erfindung ist auch ein Verfahren zur elektrochemischen Umsetzung von CO₂ im technischen Maßstab nach dem Membranelektrolyseverfahren an einer Gasdiffusionselektrode als Kathode, dadurch gekennzeichnet, dass das Verfahren in der neuen oben beschriebenen Elektrolysezelle durchgeführt wird, wobei der Separator eine Ionenaustauschermembran ist, mit den Schritten:
- Einleiten des Katholyts, einer wässrigen Lösung enthaltend mindestens Alkalihydrogencarbonat, über den Katholytzulauf in den Spalt zwischen Ionenaustauschermembran und Kathode,
- Einleiten des Anolyts, einer wässrigen Lösung enthaltend mindestens Alkalihydrogencarbonat, über den Anolytzulauf in den Anodenraum,
- Einleiten des Kohlendioxidgasstroms durch die erste Gaszuleitung in den Gasraum,
- Einstellen der Elektrolysespannung an den Stromleitungen,
- Abführen des reagierten Katholyts am Katholytablauf,
- Abführen des Anodenreaktionsprodukts bestehend aus Anolyt und Produktgas, wobei Anolyt durch den Anolytablauf und Produktgas Sauerstoff und ggf. CO₂ durch die zweite Gasableitung oder insbesondere bevorzugt Anolyt und Produktgas gemeinsam über eine Leitung abgeführt werden,
- Abführen des gasförmigen Kathodenreaktionsprodukts bestehend wenigstens aus CO, unverbrauchtem CO₂ und gegebenenfalls Wasserstoff über die erste Gasableitung aus dem Gasraum,
- Trennung des Gasgemisches aus CO, unverbrauchtem CO₂ und gegebenenfalls Wasserstoff in die Komponenten und Rückführung des unverbrauchten CO₂ in die erste Gaszuleitung,
- Einstellen der Anfangskonzentration an Alkalihydrogencarbonat im abgeführten Anolyt und Katholyt, und
- Rückführung des Katholyts in den Katholytzulauf und Rückführung des Anolyts in den Anolytzulauf.

Weiterer Gegenstand der Erfindung ist noch ein Verfahren zur elektrochemischen Umsetzung von CO₂ im technischen Maßstab nach dem Diaphragmaelektrolyseverfahren an einer Gasdiffusionselektrode als Kathode, dadurch gekennzeichnet, dass das Verfahren in der neuen oben beschriebenen Elektrolysezelle durchgeführt wird wobei der Separator ein Diaphragma ist, mit den Schritten:
- Einleiten des Katholyts, einer wässrigen Lösung enthaltend mindestens Alkalihydrogencarbonat, über den Katholytzulauf in den Spalt zwischen Diaphragma und Kathode,
- Einleiten des Anolyts, einer wässrigen Lösung enthaltend mindestens Alkalihydrogencarbonat, über den Anolytzulauf in den Anodenraum,
- Einleiten des Kohlendioxidgasstroms durch die erste Gaszuleitung in den Gasraum,
- Einstellen der Elektrolysespannung an den Stromleitungen, Abführen des reagierten Katholyts am Katholytablauf,
- Abführen des Anodenreaktionsprodukts bestehend aus Anolyt und Produktgas, wobei Anolyt durch den Anolytablauf und Produktgas Sauerstoff und ggf. CO₂ durch die zweite Gasableitung oder insbesondere bevorzugt Anolyt und Produktgas gemeinsam über eine Leitung abgeführt werden,
- Abführen des gasförmigen Kathodenreaktionsprodukts bestehend wenigstens aus CO, unverbrauchtem CO₂ und gegebenenfalls Wasserstoff über die erste Gasableitung aus dem Gasraum,
- Trennung des Gasgemisches aus CO, unverbrauchtem CO₂ und gegebenenfalls Wasserstoff in die Komponenten und Rückführung des unverbrauchten CO₂ in die erste Gaszuleitung,
- Einstellen der Anfangskonzentration an Alkalihydrogencarbonat im abgeführten Anolyt und Katholyt, und
- Rückführung des Katholyts in den Katholytzulauf und Rückführung des Anolyts in den Anolytzulauf.

Das Kohlendioxidgas wird in einer bevorzugten Ausführung der oben genannten Verfahren mit Wasserdampf angefeuchtet, bevor es in die Elektrolysezelle und in den Gasraum zugeführt wird. Hierbei wird das Kohlendioxidgas mit so viel Wasser beladen, dass der Wasserdampfpartialdruck des Katholyten in der Zelle dem des Wasserdampfpartialdruckes des zugeführten Kohlendioxidgases entspricht. Hierdurch kann vermieden werden, dass dem Elektrolyten im Inneren der Gasdiffusionselektrode an der Phasengrenzfläche Wasser zugeführt und Wasser entzogen wird. Ggf. muß das zugeführte Kohlendioxidgas erwärmt werden, damit eine ausreichende Wassermenge vom Kohlendioxid aufgenommen werden kann.

Die beiden neuen Verfahren (Membranelektrolyse bzw. Diaphragmaelektrolyse) werden bevorzugt so durchgeführt, dass die Gasgeschwindigkeit im Gasraum nahe der Rückseite der Gasdiffusionselektrode von 0,001 m/s bis 15 m/s, bevorzugt von 0,01 m/s bis 10 m/s beträgt.

In einer weiteren bevorzugten Ausführung werden die beiden neuen Verfahren (Membranelektrolyse bzw. Diaphragmaelektrolyse) so durchgeführt, dass die Driftgeschwindigkeit, mit der der Katholyt durch den Spalt von oben nach unten fließt, 0,2 cm/s bis 15 cm/s, bevorzugt 1 cm/s bis 10 cm/s beträgt. Unabhängig hiervon wird der Volumenstrom des Anolyts in der Anodenhalbschale auf einen Wert von 10 L/(h*m²) bis 300 L/(h*m²) eingestellt (hierbei bedeutet die Einheiten L= Liter Anolyt, h Stunde und m² die Fläche der Anode in m²).

Die Erfindung wird nachstehend anhand der Figuren beispielhaft näher erläutert.

Es zeigen:
- Fig. 1: einen schematischen vertikalen Querschnitt durch eine Elektrolysezelle Z
- Fig. 2: die Anolytzu- und -ableitung mit gemeinsamem Ablauf mehrerer Elektrolysezellen
- Fig. 3: die Anolytzu- und -ableitung mit getrennten Abläufen mehrerer Elektrolysezellen
- Fig. 4: der Katholytzu- und -ablauf mehrerer Elektrolysezellen
- Fig. 5: der Gaszu und -ablauf an der Kathode
- Fig. 6: eine schematische Übersicht über das Gesamtverfahren

In den Figuren haben die Bezugszeichen die nachstehende Bedeutung:
- 1: Kathodenhalbschale
- 2: Anodenhalbschale
- 3: Separator (Diaphragma, Ionenaustauschermembran)
- 4: Gasraum (Kathode)
- 5: erste Gaszuleitung für Kohlendioxid (Kathodenraum)
- 6: erste Gasableitung für gasförmige Reaktionsprodukte (Kathodenraum)
- 7: zweite Gasableitung für das Anodenreaktionsprodukt (Anodenraum)
- 8: Anolytzulauf
- 9: Anolytablauf
- 9a: Sauerstoffhaltiger Anolytablauf zur Gasabtrennungseinheit
- 9b: Sauerstofffreier Anolytablauf
- 10: Anode
- 11: Kathode (GDE)
- 12: Katholytspalt
- 13: Katholytzulauf
- 14: Katholytablauf
- 14a: CO / H₂ haltiger Katholytablauf aus der Sammelvorrichtung 43 zur Gasabtrennungseinheit 74
- 14b: CO / H₂ freier Katholytablauf
- 15: Anodenraum
- 15a: Anolyt
- 16: Kathodenraum
- 17: Katholyt
- 18: Zuleitung von Wasser oder konzentrierten oder verdünnten Elektrolyt zur Konzentrationseinstellung
- 19: Elektrolytsammelvorrichtung
- 20: zweite Gastrenneinheit zur Trennung von CO₂ O₂
- 21: Gastrenneinheit CO H₂ CO₂
- 24: Strömungsbremse
- 31: Stromleitung Kathode
- 32: Stromleitung Anode
- 33: Kohlendioxidgas
- 34: Verteilerkanal
- 35: Elastische Struktur
- 40: Äußere Verteilerrohrleitung für Anolyt Zuläufe 8
- 41: Äußere Sammelrohrleitung für Anolyt Abläufe 9
- 41a: Gasabfuhrkanal für O₂ CO₂
- 41b: Äußere Sammelrohrleitung für vereinigte Anolyt und Gasableitungen 70 (Gas und Elektrolytabfuhr) mit Gas-/Flüssigkeitstrennung
- 42: Äußere Verteilerrohrleitung für Katholyt Zuläufe 13
- 43: Äußere Sammelrohrleitung für Katholyt Abläufe 14
- 44: Äußere Verteilerrohrleitung für Gaszuleitung 5 zur Kathode
- 45: Äußere Sammelrohrleitung für erste Gasableitung 6 von der Kathode
- 50: CO Gas
- 51: H₂ Gas
- 52: O₂ Gas
- 53: CO₂ Gas Rückführungsleitung
- 60: Endelektrolysezelle Stromzufuhr
- 61: Endelektrolysezelle Stromabfuhr
- 62: Stromzufuhrplatte
- 63: Stromabfuhrplatte
- 70: Gas- und Elektrolytabfuhr Anode
- 72: Gasabtrennungseinheit für Sauerstoff
- 74: Gasabtrennungseinheit für Wasserstoff und Kohlenmonoxid
- 90: elektrisch leitende Verbindung Anode mit Anodenhalbschale
- 91: elektrisch leitende Verbindung von GDE 7 und elastischer Struktur 35 mit der Kathodenhalbschale
- Z: Elektrolysezelle
- E: Elektrolyseur

### Beispiele

### Allgemeine Beschreibung des Aufbaus einer erfindungsgemäßen Elektrolvsezelle bzw. des Elektrolvseurs

### Kathodenhalbschale

Die Kathodenhalbschale 1 weist einen Elektrolytzulauf 13 und einen Elektrolytablauf 14 sowie eine Gaszuführung 5 und eine Gasabführung 6 (siehe Fig. 1) auf.

Der Elektrolytzulauf 13 zur Kathodenhalbschale 1 erfolgt von oben und der zugeführte Katholyt 17 fließt von oben nach unten entlang der Gasdiffusionselektrode (GDE) 11. Dabei fließt der Katholyt 17 im Spalt 12 zwischen der Ionenaustauschermembran 3 und der GDE 11 nach unten. Um zu hohe Elektrolytflüsse durch den Spalt 12 zu vermeiden, ist eine Strömungsbremse 24 im Spalt 12 montiert.

Die Strömungsbremse 24 wird aus einem porösen Gewebe aus PTFE wie in der WO2003/042430A2 beschrieben gefertigt.

Um zu gewährleisten, dass der Spalt immer mit ausreichend Katholyt 17 versorgt ist, erfolgt die Zuführung über einen Verteilerkanal 34. Zur Sicherstellung, dass der Verteilerkanal 34 immer mit Katholyt 17 gefüllt ist, kann dieser einen, hier nicht gezeichneten, Überlauf aufweisen, über den ggf. überschüssig zugeführter Katholyt 17 abgeführt werden kann.

Die Kontaktierung der GDE 11 mit der Stromzuleitung 31 im Kathodenraum erfolgt über eine elastisch gelagerte elektrisch leitende Struktur 35. Diese elastische Struktur 35 liegt auf einer steifen Nickel-Metall-Struktur in Form eines Streckmetalls, auf (in Fig. 1 nicht gezeichnet). Das Streckmetall ist mit einer steifen Verbindung 91 mit der Kathodenhalbschale 1 elektrisch leitend verbunden. Die GDE 11 ist dabei auf der elastischen Struktur 35 gelagert und wird von der Seite des Gasraumes 4 aus elektrisch kontaktiert. Die Kathodenhalbschale 1 befindet sich entweder bei der bipolaren Verschaltung mehrerer Elektrolysezellen Z1, in elektrischem Kontakt mit einer Anodenhalbschale 2 einer anderen benachbarten Elektrolysezelle Z2 oder mit der Stromzufuhrplatte 62. Entsprechend ist die äußerste Anodenhalbschale 2 mit der Stromabfuhrplatte 63 elektrisch verbunden.

Die Gaszuführung 5 für die Einleitung von Kohlendioxid 33 zum Gasraum 4 erfolgt im unteren Teil des Gasraums 4, die Abführungsleitung 6 für gasförmige Reaktionsprodukte aus dem Kathodenraum 16 ist oben am Gasraum 4 angebracht. Um zu vermeiden, dass Gas mit dem Elektrolyt den Kathodenraum 16 über den Katholytablauf 14 verlässt, wird der Ablauf 14 in einer Variante zweckmäßigerweise so angeordnet, dass dieser in die äußeren Sammelrohrleitung für Katholyt 43 getaucht eingeführt wird. Diese Tauchung ist grundsätzlich bekannt (siehe z.B. DE102005027735A1).

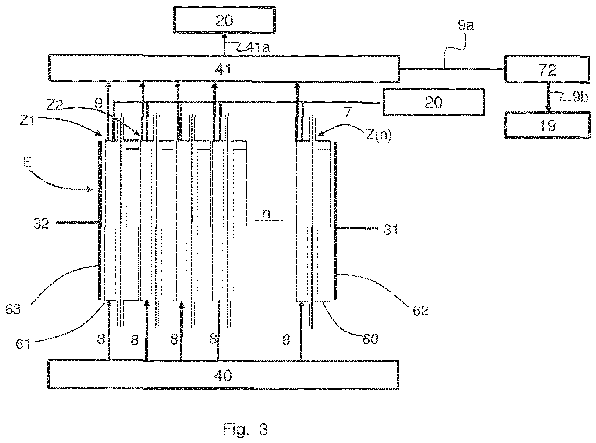

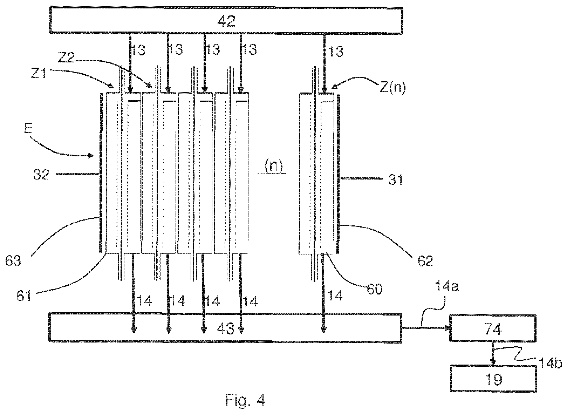

Die Ablaufleitungen 14 und die Zulaufleitungen 13 für den Katholyt werden in einem Elektrolyseur E mit einer Vielzahl (n) von Elektrolysezellen Z1, Z2, ...Z(n) über äußere Verbindungsrohrleitungen - Sammler 43 bzw. Verteiler 42 - (Fig. 4) zusammengeführt, in denen eine Strömungsverbindung besteht. Ebenso werden die Gasableitungen 6 und Gaszuleitungen 5 über äußere Verbindungsrohrleitungen - Sammler 45 bzw. Verteiler 44- (Fig. 5), zusammengeführt. In Figur 3 ist die analoge Zusammenführung von Anolytzuleitungen 8 vom Verteiler 40 und die Zusammenführung von Anolytableitungen 9 im Sammler 41 dargestellt. Die Gasableitungen 7 für das Anodengas werden gesammelt, die kann ebenfalls über eine Sammelrohrleitung (nicht gezeichnet) erfolgen und der zweiten Gastrenneinheit 20 zugeführt (Fig. 3) oder das Anodengas wird zusammen mit dem Anolyt über gemeinsame Leitungen 70 aus dem Anodenraum 15 abgeleitet und im Sammler 41b, der als Gas-/Flüssigkeitstrennvorrichtung ausgebildet ist, in einen Elektrolytstrom (in Leitung 9a) und das Anodengas (in Leitung 41a) aufgetrennt (Fig. 2). Das Anodengas wird dann über die Leitung 41a der zweiten Gastrenneinheit 20 zur Trennung von Sauerstoff und CO₂ zugeführt.

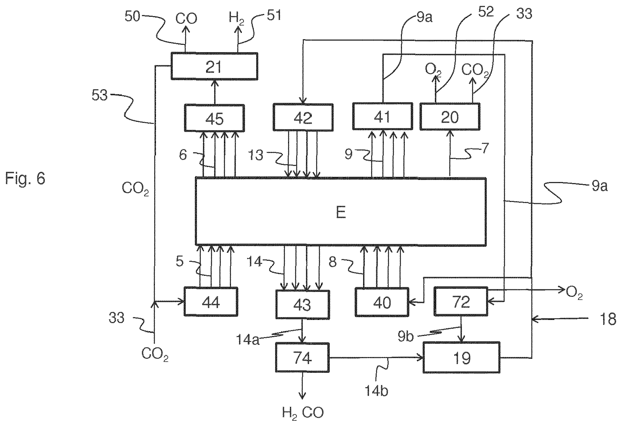

Der über den Katholytablauf 14 in dem Sammler 43 zusammengeführte Katholyt wird bevorzugt über einen Katholytablauf 14a einer Gasabtrennung 74 zugeleitet, in der der Katholyt von restlichem gelöstem oder dispergierten Wasserstoff und Kohlenmonoxid befreit wird (siehe Fig. 6). Diese Gasreste werden verworfen oder verbrannt.

Der Gasabtrennung 72 wird ein sauerstofffreier Elektrolyt über den Ablauf 9b entnommen und einer Elektrolysesammelvorrichtung 19 zugeführt. Von hier kann nach Konzentrationseinstellung über Zugabe von Wasser oder einer verdünnteren oder konzentrierten Elektrolytlösung 18 der Elektrolyt auf Anoden und Kathoden verteilt werden. Von der Elektrolytsammelvorrichtung 19 wird der Elektrolyt über Wärmetauscher (nicht gezeichnet) auf die notwendige Einlauftemperatur gebracht und über die Verteiler 42 und 40 den Elektrolysezellen über die Leitungen 8 und 13 zugeführt (siehe Fig. 6).

Der in dem Sammler 41 über den Ablauf 9 zusammengeführte Anolyt wird bevorzugt einer Gasabtrennung 72 über die Leitung 9a zugeleitet, in der der Anolyt von restlichem Gasen wie Sauerstoff befreit wird. Diese Gasreste werden je nach Menge verworfen oder wiederverwendet.

Der von Sauerstoff befreite Anolyt wird über die Leitung 9b einer Elektrolytsammelvorrichtung 19 zugeführt.

Als Gasabtrennung 72 bzw. 74 können grundsätzlich bekannte Ausblaskolonnen dienen.

Eine Elektrolysezelle Z mit einer aktiven Elektrodenfläche von mindestens 0,1 m² wird für den Betrieb zugrunde gelegt. Die Elektrolysezelle Z weist dabei eine Breite von mindestens 10 cm auf. Die Höhe der Elektrode beträgt mindestens 30 cm. Die Elektrolytbeaufschlagung der GDE beträgt typischerweise 25 L/(h*m²) bis 500 L/(h*m²). Hierbei steht L für das geförderte Volumen an Katholyt in Liter, h für Stunde und m² für die Fläche der eingebauten GDE.
Die Driftgeschwindigkeit, mit der der Katholyt 17 durch den Spalt 12 gebildet aus GDE 11 und Separator 3 von oben nach unten fließt, beträgt typischerweise 0,2 cm/s bis 15 cm/s.

Der Spalt 12 zwischen GDE 11 und Separator (Ionenaustauschermembran 3) hat eine Spaltbreite von mindestens 0,1 mm und ist mindestens 30 cm hoch und 10 cm breit.

Als Katholyt 17 werden wässrige Lösungen von Alkalimetallhydrogencarbonaten oder deren Mischungen eingesetzt, wie z.B. Natrium- oder Kaliumhydrogencarbonat. Es können weitere Salze als Leitsalze zugesetzt werden, wie Alkalimetallsulfate oder -hydrogensulfate. Die Konzentration der Salze beträgt in Summe bevorzugt 0,1 bis 2 mol pro L, wobei die Elektrolyte mit einer Leitfähigkeit bei 25°C von größer als 10 S/m eingesetzt werden (S steht für Siemens und m für Meter). Die Messung der Leitfähigkeit kann mit handelsüblichen Leitfähigkeitsmessgeräten durchgeführt werden.

Die Auslauftemperatur des Katholyts aus der Kathodenhalbschale 1 über 14 beträgt insbesondere maximal 85°C, bevorzugt maximal 60°C, besonders bevorzugt max. 45°C. Die Temperatur des der Zelle Z zugeführten Katholyts 17 wird so geregelt, dass die Ablauftemperatur eingehalten werden kann.

Dem Gasraum 4 der Kathodenhalbschalte 1 wird CO₂ 33 über den Zulauf 5 im Überschuss zugeführt. Dabei beträgt die Menge an CO₂ bevorzugt ein mehrfaches der nach dem fließenden elektrischen Strom benötigten stöchiometrischen Menge. Es werden 0,5% bis 800% mehr an CO₂ zugegeben, als stöchiometrisch benötigt wird.

Zur besseren Verteilung des zugegebenen CO₂ kann in der Elektrolysezelle Z ein Gasverteilersystem in Form eines Schlauches (hier nicht gezeichnet) mit Bohrungen eingesetzt werden, um eine gleichmäßige Verteilung des zugeführten CO₂ zu erreichen und die Reaktionsprodukte ab zu transportieren.

### Katholytkreislauf

Der aus der Kathodenhalbschale 1 über den Kathodenablauf 14 entnommene Katholyt 17 kann ggf. noch Reste der gebildeten Gasmischung aus CO, H₂ und überschüssigem CO₂ enthalten.

Eine erste Trennung wird beispielsweise in einer ausreichend dimensionierten Sammelrohrleitung 43 erfolgen, in der die Gas-/Flüssigkeitsmischung aus der Elektrolysezelle Z zugeführt wird. Die Sammelrohrleitung 43 weist dabei mindestens eine Flüssigkeitsablauf 14a und einen Gasabfuhrkanal (nicht gezeichnet) auf. Der Gasabfuhrkanal steht dabei mit einer Gassammelleitung 45 in Verbindung. Die Gassammelleitung 45 steht mit dem Gasauslass 6 des Kathodenelements 1 in Verbindung. Die Gassammelleitung 45 führt das Gas aus allen Elektrolysezellen Z der Gastrenneinheit 21 zu.

Der Katholyt 17 aus der Gassammelleitung 43 wird über die Leitung 14a insbesondere einer Gasabtrenneinheit 74 zugeführt.

Aus der Elektrolytsammelvorrichtung 19 wird der Elektrolyt wieder der Elektrolysezelle Z zugeführt. Zuvor kann die Zusammensetzung des Elektrolyten geprüft und ggf. mit Wasser und den oben erwähnten Salzen ergänzt werden, sodass jeweils immer Elektrolyt mit der gleichen Konzentration der Elektrolysezelle Z zurückgeführt wird.

Aus der Elektrolytsammelvorrichtung 19 wird der Elektrolyt beispielsweise mittels einer Pumpe über einen Wärmetauscher und den Verteilerrohrleitungen 40, 42 wieder der Elektrolysezelle Z zugeführt.

Die weitere Verarbeitung des abgetrennten Gasgemisches aus der äußeren Sammelrohrleitung 45 bestehend aus CO, H₂ und überschüssigem CO₂ aus den Elektrolysezellen Z erfolgt beispielhaft wie folgt:
- Abkühlung des Gasgemisches in einem Wärmetauscher.
- Das bei der Abkühlung anfallende Kondensat kann z.B. dem Elektrolytkreislauf wieder zugeführt werden.
- Abtrennung des überschüssigen bzw. nicht umgesetzten CO₂. Dies kann mittels Membranverfahren und/oder durch eine Aminwäsche erfolgen. Bei der Aminwäsche werden als Absorptionsmittel unterschiedliche Ethanolamin-Wasser-Gemische oder auch andere Amine wie Monoethanolamin eingesetzt. Die CO₂-Entfernung erfolgt in der Waschkolonne fast drucklos. Das Gas durchströmt die Waschkolonne von unten nach oben, während die Aminlösung im Gegenstrom fließt und hierbei das CO₂ aufnimmt. Die beladene Waschlösung wird durch Wärmezufuhr regeneriert und kann danach erneut verwendet werden. Das freigesetzte CO₂ wird den Elektrolyseelementen wieder zugeführt. Grundsätzlich kann für die CO₂ Abtrennung auf Technologie wie für die CO₂ Abtrennung aus Kraftwerken zurückgegriffen werden (S. Schmidt, VGB PowerTech 12/2013)
- Das abgetrennte CO₂ wird der Elektrolysezelle zusammen mit dem benötigten neu zuzusetzenden CO₂ wieder zugeführt.
- Die Trennung von verbliebenem CO und Wasserstoff erfolgt dann über Membranverfahren und/oder unter Verwendung einer Cold-box. Eine Cold-box ist eine grundsätzlich bekannte Kältekammer, die bei tiefen Temperaturen betrieben wird um CO von H₂ zu trennen. In diesen Prozessen wird eine Temperatur von -180 °C und darunter erreicht. Diese Kältekammern werden zur Trennung von Synthesegas eingesetzt und können kommerziell anwenderspezifisch gestaltet werden
- Der aus der Cold-box erhaltene Wasserstoff wird der weiteren Nutzung zugeführt.
- Das aus der Cold-box erhaltene Kohlenmonoxid wird der weiteren Nutzung zum Beispiel zur Herstellung von Phosgen und Folgeprodukten für die Polymerproduktion zugeführt werden.

Ggf. wird ein kleiner Anteil des Elektrolyten (betrifft sowohl Anolyt als auch Katholyt) abgetrennt und verworfen, um die Akkumulation von Verunreinigungen in der Kreislaufführung des Elektrolyten zu vermeiden.

### Gasdiffusionselektrode

Als Gasdiffusionselektrode (GDE) wird für die CO₂ zu CO Reduktion besonders bevorzugt eine silberbasierte GDE in Analogie zu der in der EP2398101 beschriebenen Elektrode mit der nachfolgend dargestellten Variation eingesetzt. Die Porosität der katalytisch aktiven Schicht, gerechnet aus Materialdichten der eingesetzten Rohstoffe beträgt mehr als 10%, jedoch weniger als 80%.

Die GDE wird dabei wie folgt hergestellt:
3,5 kg einer Pulvermischung, bestehend aus 5 Gew.% PTFE-Pulver, 88 Gew.% Silber-I-Oxid und 7 Gew.% Silberpulver (z.B. Typ 331 der Fa. Ferro), wurden in einem Mischer der Fa. Eirich, Typ R02, ausgerüstet mit einem Sternwirbler als Mischelement, bei einer Drehzahl von 6000 U/min so gemischt, dass die Temperatur der Pulvermischung 55 °C nicht überstieg. Insgesamt wurde das Mischen dreimal bei einer Mischzeit von 50 Sekunden und dreimal bei einer Mischzeit von 60 Sekunden durchgeführt. Nach dem Mischen wurde die Pulvermischung mit einem Sieb mit einer Maschenweite von 1,0 mm gesiebt. Die gesiebte Pulvermischung wurde anschließend auf ein elektrisch leitfähiges Trägerelement aufgebracht. Das Trägerelement war ein Drahtnetz aus Silber mit einer Drahtdicke von 0,14 mm und einer Maschenweite von 0,5 mm. Das Aufbringen erfolgte mit Hilfe einer 2 mm dicken Schablone, wobei das Pulver mit einem Sieb mit einer Maschenweite von 1,0 mm aufgebracht wurde. Überschüssiges Pulver, das über die Dicke der Schablone hinausragte, wurde mittels eines Abstreifers entfernt. Nach Entfernung der Schablone wird der Träger mit der aufgebrachten Pulvermischung mittels einer Walzenpresse mit einer Presskraft von 0,45 kN/cm verpresst. Der Walzenpresse wurde die Gasdiffusionselektrode entnommen. Die Gasdiffusionselektrode hatte eine Porosität von etwa 50 %.

### Separator

Die Trennung von Anoden und Kathodenkammer dient der Vermeidung der Vermischung der Elektrolyte und der Vermeidung des elektrochemischen Kurzschlusses. Das anodisch gebildete Gas könnte ohne Separatoren direkt an der Kathode wieder reduziert werden, wodurch ein elektrochemischer Kurzschluss entstünde, die Stromausbeute verringert und die Wirtschaftlichkeit des Verfahrens verschlechtert. Weiterhin könnte der an GDE gebildeter Wasserstoff und/oder Kohlenmonoxid mit dem anodisch gebildeten Sauerstoff explosive Gasmischungen bilden. Als Separatoren können besonders bevorzugt Kationenaustauschermembranen wie fumasep F 1075-PK der Firma Fumatech oder der Typ Nafion N 324 (Hersteller Chemours Company) insbesondere Nafion N324 bevorzugt eingesetzt werden. Als Diaphragma eignet sich beispielsweise das aus PFTE und Zirkondioxid aufgebaute Struktur Zirfon™ Pearl (Hersteller Agfa). Beispielhaft wird eine Kationenaustauschermembran Nafion N324 eingesetzt.

Die Elektrolysezelle ist insbesondere so aufgebaut, dass der Separator auf der Anodenstruktur aufliegt. Die Anode ist dabei so ausgeführt, dass diese Hohlräume aufweist, die das an der Anode gebildete Gas auf die dem Separator abgewandten Seite leitet. Als Anodenstruktur kann z.B. ein Streckmetall eingesetzt werden, wobei andere aus dem Stand der Technik bekannten Strukturen eingesetzt werden können.

Der Druck mit der der Separator auf die Anode gedrückt wird beträgt dabei insbesondere mehr als 10 mbar.

### Anodenraum

Die Anodenhalbschale 2 der Elektrolysezelle Z besteht beispielsweise aus einem Anolytzulauf 8 und einem Anolytablauf 9, und einer zweiten Gasableitung 7 aus der das gebildete Gas abgeführt wird, sowie einer Anode 10. Die Anode 10 ist dabei elektrisch leitfähig über die Leitung 90 mit der Anodenhalbschale 2 verbunden (Fig. 1).

Der Anolyt 15a wird im unteren Abschnitt in den Anodenraum 15 über den Anolytzulauf 8 zugeführt und im Kopfteil des Anodenraums 15 über den Anolytablauf 9 entnommen. Somit durchlaufen Katholyt 17 und Anolyt 15a die Elektrolysezelle Z im Gegenstrom.

Der Anolyt 15a wird in Abhängigkeit von der Anodenreaktion ausgewählt. Im vorliegenden Fall, bei dem an der Anode 10 Sauerstoff entwickelt wird, wird ein gleicher Elektrolyt als Anolyt 15a wie als Katholyt 17 eingesetzt.

Der der Anodenhalbschale 2 zugeführte Anolyt 15a besteht daher beispielhaft aus einem wässrigen Alkalihydrogencarbonat enthaltenden Elektrolyten, dem zur Steigerung der Leitfähigkeit auch andere inerte Salze zugesetzt werden. Hierzu zählen Alkalisulfate, Alkalihydrogensulfate, oder deren Mischungen. Die gesamte Konzentration der Alkaliionen in der Elektrolytlösung beträgt insbesondere 0,01 mol/L bis 2 mol / L.

Der pH-Wert des der Anodenhalbschalte zugeführten Anolyten 15a beträgt bevorzugt 4 bis 9
Der der Anodenhalbschale 2 entnommene Anolyt 15a hat bevorzugt eine Konzentration an Alkaliionen von 0,01 mol/L bis 2 mol / L.

Der Druck in der Anodenhalbschale wird insbesondere um 0 bis 500 mbar niedriger als der in der Kathodenhalbschale eingestellt.

Der Anodenhalbschale wird ein Volumenstrom des Anolyts 15a über den Zulauf 8 insbesondere im Bereich von 10 L/(h*m²) bis 300 L/(h*m²) zugeführt.

Die Auslauftemperatur des Elektrolyten aus der Anodenhalbschale beträgt bevorzugt höchstens 85°C, bevorzugt max. 60°C, besonders bevorzugt maximal 45°C. Die Temperatur des der Zelle Z zugeführten Anolyts wird dabei über einen Wärmetauscher so geregelt, dass die Auslauftemperatur eingehalten werden kann.

Die aus der Anodenhalbschale 2 entnommene Mischung aus gebildetem Sauerstoff und gegebenenfalls Kohlendioxid und dem Anolyten wird über die Leitungen 70 zunächst einer äußeren Sammelrohrleitung 41b zugeführt. Die Sammelrohrleitung 41b weist dabei mindestens einen Flüssigkeitsablauf 9a und einen Gasabfuhrkanal 41a auf.

Über die Gasableitung 7 wird in der Variante mit getrennter Abführung von Anolyt und Reaktionsgas (Fig. 3) der gebildete Sauerstoff gemeinsam mit dem Kohlendioxid aus der Anodenhalbschale 2 heraus geführt, ggf. getrocknet und zweiten Gastrenneinheit 20 zugeführt. Das in der zweiten Gastrenneinheit 20 abgetrennte CO₂ wird dem Gasraum 4 der Kathodenhalbschale 1 über die Leitung 5 wieder zugeführt. Der Sauerstoff 52 wird gesammelt und einer weiteren Nutzung zugeführt.

Aus der Anodenhalbschale 2 wird in der Variante mit getrennter Abführung von Anolyt und Reaktionsgas (Fig. 3) der Anolyt 15a über die Leitung 9 herausgeführt und auf eine Sammelrohrleitung 41 geführt. Der Anolyt 15a wird von restlichem Sauerstoff und CO₂ Gas in der Sammelrohrleitung getrennt. Der Anolyt wird dann zur Restentgasung über die Leitung 9a einer Gasabtrennungseinheit 72 für den Sauerstoff zugeführt. Der von restlichem Sauerstoff befreite Anolyt wird über eine Leitung 9b einem Elektrolytsammelvorrichtung 19 zugeführt.

Der aus der Kathodenhalbschale 2 über den Auslauf 14 ablaufende Katholyt 17 wird einer äußeren Sammelrohrleitung 43 zugeführt (Fig. 4). Ggf. mitgerissenes Kohlenmonoxid oder Wasserstoff werden aus der Sammelrohrleitung 43 über eine nicht gezeichnete Leitung der Sammelleitung 45 für CO/H₂ zugeführt. Über die Leitung 14a gelangt der Katholyt 17 zur Entfernung von restlichem CO/H₂ in eine Gasabtrennungseinheit 74. Der von CO und H₂ befreite Katholyt wird über die Leitung 14b der Elektrolytsammelvorrichtung 19 zugeführt.

Aus dem Elektrolytsammelvorrichtung 19 wird der vereinigte Elektrolyt wieder der Elektrolysezelle Z zugeführt. Zuvor wird die Zusammensetzung des Elektrolyten geprüft und ggf. über die Zuleitung 18 mit Wasser und/oder den oben erwähnten Salzen ergänzt, sodass jeweils immer Anolyt 15a und Katholyt 17 der gleichen Konzentration der Elektrolysezelle Z zurückgeführt werden kann.

Aus dem Elektrolytsammelvorrichtung 19 wird der Elektrolyt mittels einer Pumpe entnommen und über Wärmetauscher und den Verbindungrohrleitungen der Anodenhalbschale sowie über einen weiteren Wärmetauscher der Kathodenhalbschale zugeführt (nicht gezeichnet).

### Verschaltung der Elektrolysezellen zu einem Elektrolyseur

Einzelne Elektrolysezellen Z1, Z2... werden mit mindestens 10 und max. 100 Elementen in einem Gestellrahmen zusammengefügt. Die Ablaufleitungen für die Elektrolyte der Elemente 14; 9 und die Zulaufleitungen für die Elektrolyte 8,13 sowie die Gasableitungen 7; 70; 6 und Gaszuleitungen 5 werden von mehrere Elektrolysezellen über äußere Sammler bzw. Verteiler zusammengeführt, wie oben ausgeführt wurde.

### Elektrische Trennung

Werden mehrere Elektrolysezellen Z in einem Elektrolyseur E bipolar in Reihe geschaltet, so steigt mit jeder weiteren Elektrolysezelle Z die Gesamtspannung über dem Elektrolyseur an und die Gefahr von Streuströmen steigt. Somit ist eine sorgfältige elektrische Trennung der Elektrolytströme, die in der einzelnen Elektrolysezelle zugeführt und von dieser abgeführt werden durchzuführen. Beträgt die Gesamtspannung mehr als 200 V so werden insbesondere zwischen dem strömungstechnisch eingebundenen Verbindungsrohrleitungen und der Elektrolysezelle elektrisch isolierende Schläuche oder Rohrleitungen eingesetzt.

Der Kunststoff wird dabei insbesondere so ausgewählt, dass eine chemische Beständigkeit als auch einer thermischen Beständigkeit gegenüber dem eingesetzten Elektrolyten und den Reaktionsgasen besteht.

Kunststoffe wie z.B. Polypropylen, Polyethylen oder PTFE (Polytetrafluoräthylen) können bevorzugt eingesetzt werden.

### Beispiel 1 (erfindungsgemäß)

Zum Einsatz gelangt eine Elektrolyseeinheit bestehend aus einem Elektrolyseur E mit einzelnen Elektrolysezellen Z, Z1, Z2, .... Z(n) die bipolar miteinander in einem Elektrolyseurgestellrahmen (nicht gezeichnet) verbunden sind. Die einzelnen Elektrolysezellen Z weisen dabei eine aktive Elektrodenfläche von 2,53 m² auf. Jede einzelne Elektrolysezelle Z(n) weist dabei eine Anodenhalbschale 2 aus Titan sowie eine handelsübliche dimensionsstabile Anode 10, die mit einer Platin-Beschichtung der Fa. Umicore, Platinode®, zur Sauerstoff-Entwicklung ausgerüstet ist. Die Kathodenhalbschale besteht aus Nickel. Alle von Katholyt 17 berührten Teile der Kathodenhalbschale 1 sind vergoldet. Ebenso vergoldet sind alle Teile, die die Gasdiffusionselektrode 11 elektrisch kontaktieren. Als Gasdiffusionselektrode 11 wird eine Silber-PTFE-basierte Elektrode (Herstellung oben beschrieben) eingesetzt. Anodenhalbschale 2 und Kathodenhalbschale 1 werden durch eine Ionenaustauschermembran 3 vom Typ Nafion 324 (Hersteller Chemours) getrennt.

Am Gleichrichter wird die Spannung über den Elektrolysezellen so eingestellt, dass ein Strom von 7590 A fließt.

Die einzelne Elektrolysezelle Z wird dabei wie folgt betrieben:
In die Anodenhalbschale 2 wird eine 15 Gew.%ige Kaliumhydrogencarbonat Lösung 15a mit einem Massenstrom von 400 kg/h und einer Temperatur von 35°C über die Zuleitung 8 zugeführt. Aus der Anodenhalbschale 2 wird ein Gasgemisch bestehend aus 2266 g/h Sauerstoff und 12461 g/h CO₂ über die Ableitung 7 entnommen. Weiterhin wird der Anodenhalbschale 2 eine 8,8 Gew.-%ige Kaliumhydrogencarbonat Lösung 358,9 kg/h mit einer Temperatur von 42°C über die Ableitung 9 entnommen. Die Gasmischung aus Sauerstoff und CO₂ wird einer zweiten Gastrenneinheit 20 zugeführt, die den Sauerstoff 52 vom CO₂ 33 trennt. Das abgetrennte CO₂ 33 wird dem CO₂ Volumenstrom 53 zugegeben, der dem Gasraum 4 der Kathodenhalbschale 1 über die Zuleitung 5 zugeführt wird.

Der Kathodenhalbschale 1 wird eine 15 Gew.-%ige Kaliumhydrogencarbonat-Lösung 17 mit einem Massenstrom von 600 kg/h und einer Temperatur von 30°C über die Zuleitung 13 zugeführt. Die Temperatur der aus der Kathodenhalbschale 1 über die Ableitung 14 ablaufenden Lösung beträgt 45,3°C und weist einen Gehalt an Kaliumhydrogencarbonat von 18,5 Gew.-% auf. Der ablaufende Massenstrom beträgt 640,1 kg/h.

Der aus der Anodenhalbschale 2 ablaufende Anolyt 15a wird einer äußeren Sammelrohrleitung 41 zugeführt. Aus der äußeren Sammelrohrleitung 41 wird der Anolyt 15a einer Gasabtrennung 72 zur Entfernung von restlichen Mengen an Sauerstoff zugeführt. Die Gasabtrennungseinheit 72 besteht aus einer Ausblaskolonne (nicht gezeichnet) mit einem Durchmesser von 50cm und einer Höhe von 200cm. Im Gegenstrom wird dem von oben über eine Verteilerdüse eingebrachten Katholyt Stickstoff mit einem Volumenstrom von 100 L/h entgegengeströmt. Aus der Ausblaskolonne kann O₂-freier Elektrolyt entnommen und der Elektrolytsammelvorrichtung 19 zugeführt werden.

Der aus der Kathodenhalbschale 1 über die Leitung 14 ablaufende Katholyt 17 wird einer äußeren Sammelrohrleitung 43 zugeführt. Der Katholyt 17 wird über die Leitung 14a mit einer Gasabtrennungseinheit 74 verbunden. Die Gasabtrennungseinheit 74 besteht aus einer Ausblaskolonne (nicht gezeichnet) mit einem Durchmesser von 50 cm und einer Höhe von 200 cm. Im Gegenstrom wird dem von oben über eine Verteilerdüse eingebrachten Katholyt Stickstoff mit einem Volumenstrom von 100 L/h entgegengeströmt. Aus der Ausblaskolonne wird CO und H₂ freier Katholyt 17 entnommen und über die Leitung 14b der Elektrolytsammelvorrichtung 19 zugeführt. Die ausgeblasenen Gase werden einer Verbrennungseinheit zugeführt.

Dem Gasraum 4 der Kathodenhalbschale 1 wird über die Gaszuleitung 5 ein Massenstrom von 36511 g/h CO₂ zugeführt. Die Menge entspricht ca. dem 5,8 fachen des stöchiometrisch benötigten CO₂. Die Temperatur beträgt 25°C. Das CO₂ wird bei 25°C mit Wasser gesättigt. Dies erfolgt durch Eindüsung von Wasser in die Zulaufleitung 5. Die Gasgeschwindigkeit des CO₂ im Gasraum beträgt bei 25°C ca. 0,06 m/s. Bei der Berechnung wurde die anteilige Gasmenge aus Wasserdampf nicht berücksichtigt.

Dem Gasraum 4 wird über die Ableitung 6 einer Gassammelleitung 45 das Reaktionsgasgemisch zugeführt. Das Gas aus der Gassammelleitung 45 wird einer Gastrenneinheit 21 zur Trennung von CO, H₂ und überschüssigem bzw. nicht umgesetzten CO₂ zugeführt (Fig. 5). Die Gasmischung hat folgende Zusammensetzung: Kohlenmonoxid: 2577 g/h, Wasserstoff 99 g/h, CO₂ 20000 g/h. In einem ersten Teil der Gastrenneinheit 21 wird das abgetrennte CO₂ 33 einer Gasrückführleitung 53 zugeführt und über eine Gasverteilerleitung 44 der Gaszuführung 5 zur Kathodenhalbschale 1 zurückgeführt. Ein Teilstrom des CO/H₂ Mischung aus der ersten Stufe der Gastrennung in der Gastrenneinheit 21 wird der chemischen Synthese von Methanol zugeführt (nicht gezeichnet). Die verbleibenden CO/H₂ Mischung wird der zweiten Stufe der Gastrenneinheit 21 zugeführt, die Wasserstoff und CO trennt. Die getrennten Gase werden weiteren chemischen Synthesen zugeführt, insbesondere wird das CO einem Verfahren zur Herstellung von Isocyanat zugeleitet, bei dem in einem ersten Schritt aus CO mit Chlor Phosgen erzeugt und das erhaltene Phosgen zu Isocyanaten weiterverarbeitet wird.

Hiermit konnte gezeigt werden, dass CO₂ in einem technischen Elektrolyseur zu CO umgesetzt werden kann und vor allem ein nachhaltiges Herstellverfahren zur Herstellung benötigter technischer Mengen von CO ermöglicht ist.

## Patentansprüche

1. Elektrolysezelle zur elektrochemischen Umsetzung von CO₂ im technischen Maßstab wenigstens umfassend eine Kathodenhalbschale (1) mit einer Kathode (11), mit einem Gasraum (4) verbunden mit einer ersten Gaszuleitung (5) für Kohlendioxidgas und mit einer ersten Gasableitung (6) für gasförmige Reaktionsprodukte, insbesondere Kohlenmonoxid, Wasserstoff und unverbrauchtes Kohlendioxidgas, und mit einem Katholytzulauf (13) und einem Katholytablauf (14) weiter umfassend eine Anodenhalbschale (2) und einen zwischen Anodenhalbschale (2) und Kathodenhalbschale (1) angeordneten Separator (3) zur Trennung von Anodenraum (15) und Kathodenraum (16), wobei die Anodenhalbschale (2) mindestens mit einer zweiten Gasableitung (7) für das Anodenreaktionspodukt, insbesondere Sauerstoff und gegebenenfalls Kohlendioxid, einem Anolytzulauf (8) und einem Anolytablauf (9 sowie einer Anode (10) versehen ist, weiter umfassend elektrische Stromleitungen (31, 32) zur Verbindung von Anode und Kathode mit einer Gleichspannungsquelle, **dadurch gekennzeichnet, dass** die Kathode (11) als Gasdiffusionselektrode zur Umsetzung von Kohlendioxidgas ausgebildet ist und Kathode (11), Anode (10) und der Separator (3) mit ihrer Hauptausdehnung vertikal angeordnet sind, und zwischen Separator (3) und Kathode (11) ein Spalt (12) zur Durchleitung des Katholyts (17) nach dem Prinzip eines fallenden Flüssigkeitsfilms angeordnet ist.

2. Elektrolysezelle gemäß Anspruch 1, **dadurch gekennzeichnet, dass** der Separator (3) eine Ionenaustauschermembran oder ein Diaphragma, bevorzugt eine Ionenaustauschermembran ist.

3. Elektrolysezelle gemäß Anspruch loder 2, **dadurch gekennzeichnet, dass** die vertikale Hauptausdehnung der Kathode (11) mindestens 30 cm, bevorzugt mindestens 60 cm, besonders bevorzugt mindestens 100 cm beträgt.

4. Elektrolysezelle gemäß wenigstens einem der Ansprüche 1 bis 3, **dadurch gekennzeichnet, dass** die Kathode (11) als Gasdiffusionselektrode auf Basis von Silber und/oder Silberoxid, bevorzugt Silberpartikeln, als Elektrokatalysator und mit einem pulverförmigen Fluorpolymer, insbesondere PTFE Pulver, als nichtleitendem Bindemittel auf einem metallischen oder nichtmetallischen, leitfähigen oder nichtleitfähigen Träger kompaktiert ausgebildet ist.

5. Elektrolysezelle gemäß wenigstens einem der Ansprüche 1 bis 4, **dadurch gekennzeichnet, dass** die erste Gasableitung (6) am oberen Ende des Anodenraums (15) und die zweite Gasableitung (7) am oberen Ende des Gasraums (4) angeschlossen sind und die erste Gaszuleitung (5) am unteren Ende des Gasraums (4) angeschlossen ist.

6. Elektrolysezelle gemäß wenigstens einem der Ansprüche 1 bis 5, **dadurch gekennzeichnet, dass** die zweite Gasableitung (7) für das Anodenreaktionsprodukt mit einer zweiten Gastrenneinheit (20) zur Abtrennung von Kohlendioxid aus Sauerstoff verbunden ist und die zweite Gastrenneinheit über eine Kohlendioxidleitung, und ggf. über eine Verteilerrohrleitung (44), mit der Gaszuleitung (5) verbunden ist.

7. Elektrolysezelle gemäß wenigstens einem der Ansprüche 1 bis 6, **dadurch gekennzeichnet, dass** der Katholyt eine wässrige Lösung von Alkalihydrogencarbonat, bevorzugt Kaliumhydrogencarbonat, Caesiumhydrogencarbonat oder Natriumhydrogencarbonat ist, besonders bevorzugt Kaliumhydrogencarbonat ist.

8. Elektrolysezelle gemäß wenigstens einem der Ansprüche 1 bis 7, **dadurch gekennzeichnet, dass** der Anolyt eine wässrige Lösung von Alkalihydrogencarbonat, bevorzugt Kaliumhydrogencarbonat, Caesiumhydrogencarbonat oder Natriumhydrogencarbonat, besonders bevorzugt Kaliumhydrogencarbonat ist.

9. Elektrolysezelle gemäß wenigstens einem der Ansprüche 1 bis 8,**dadurch gekennzeichnet, dass** im Falle der Verwendung des gleichen Elektrolytsalzes für Anolyt und Katholyt der Katholytablauf (14) am unteren Ende des Spaltes (12) und der Katholytzulauf (13) oberhalb des Spaltes (12) an der Kathodenhalbschale (1) angebracht ist und der Katholytablauf (14) bevorzugt über eine Sammelrohrleitung (43) mit einer Elektrolytsammelvorrichtung (19) verbunden ist, in der Katholyt aus dem Katholytablauf (14) und Anolyt aus dem Anolytablauf (9) vereinigt werden.

10. Elektrolysezelle gemäß wenigstens einem der Ansprüche 1 bis 9, **dadurch gekennzeichnet, dass** die erste Gasableitung (6), insbesondere über eine Sammelleitung (45), mit einer Gastrenneinheit (21) zur Trennung von Kohlenmonoxid, Wasserstoff und unverbrauchtem Kohlendioxidgas verbunden ist.

11. Elektrolysezelle gemäß Anspruch 10, **dadurch gekennzeichnet, dass** die Gastrenneinheit (21) eine Rückführungsleitung (53) für abgetrenntes Kohlendioxidgas aufweist, die insbesondere über eine Verteilerrohrleitung (44) mit der ersten Gaszuleitung (5) für Kohlendioxidgas verbunden ist.

12. Elektrolysezelle gemäß Anspruch 10 oder 11, **dadurch gekennzeichnet, dass** die Gastrenneinheit (21) eine Ableitung für abgetrenntes Kohlenmonoxid aufweist, die mit einer chemischen Produktionsanlage zur chemischen Umsetzung von Kohlenmonoxid verbunden ist.

13. Elektrolysezelle gemäß wenigstens einem der Ansprüche 10 bis 12, **dadurch gekennzeichnet, dass** die Gastrenneinheit (21) eine Ableitung für abgetrennten Wasserstoff aufweist, die mit einem Wasserstoffrohrnetz oder einer Abfüllanlage für Wasserstoff verbunden ist.

14. Elektrolysezelle gemäß wenigstens einem der Ansprüche 1 bis 13, **dadurch gekennzeichnet, dass** im Spalt (12) ein Mittel (24) zur Strömungsbremsung des Katholytstroms vorgesehen ist.

15. Elektrolysezelle gemäß Anspruch 14, **dadurch gekennzeichnet, dass** das Mittel (24) zur Strömungsbremsung als elektrisch nicht leitendes, inertes textiles Flächengebilde ausgebildet ist.

16. Elektrolysezelle gemäß wenigstens einem der Ansprüche 1 bis 15, **dadurch gekennzeichnet, dass** die zweite Gasableitung (7) für das Anodenreaktionsprodukt, und der Anolytablauf (9) eine Einheit (70) bilden, mit einer Sammelrohrleitung (41b) verbunden sind, in der die Gas-/Flüssigkeitstrennung erfolgt, und, ggf. über eine Gasabtrennungseinheit 72, durch eine Anolyt-Rückführungsleitung, ggf. über eine Elektrolytsammelvorrichtung (19), mit dem Anolytzulauf (8) verbunden ist.

17. Elektrolysezelle gemäß wenigstens einem der Ansprüche 1 bis 16, **dadurch gekennzeichnet, dass** die Elektrolyt-Rückführungsleitung eine Zuleitung (18) und Mischungseinheit für die Zumischung von wahlweise Wasser oder höher konzentriertem Elektrolyt aufweist.

18. Elektrolysezelle gemäß wenigstens einem der Ansprüche 1 bis 17, **dadurch gekennzeichnet, dass** die Anode (10) an dem Separator (3) mit punkt-, linien- oder flächenförmigen Kontaktstellen der Anode (10) aufliegt.

19. Elektrolyseur zur elektrochemischen Umsetzung von CO₂ im technischen Maßstab nach dem Membranelektrolyseverfahren oder Diaphragmaelektrolyseverfahren, **dadurch gekennzeichnet, dass** der Elektrolyseur eine Vielzahl von Elektrolysezellen (Z) nach einem der Ansprüche 1 bis 18 aufweist, die bipolar mit einander elektrisch verschaltet sind.

20. Elektrolyseur gemäß Anspruch 19, **dadurch gekennzeichnet, dass** zur Verbindung der Zu- und Ableitungen der mehreren Elektrolysezellen untereinander Sammler 41 für Anolyt, Sammler 43 für Katholyt, Verteiler 40 für Anolyt, Verteiler 42 für Katholyt und Gasverteiler 44 für Reaktionsgas und Gassammler 45 für Produktgase vorgesehen sind.-

21. Verfahren zur elektrochemischen Umsetzung von CO₂ im technischen Maßstab nach dem Membranelektrolyseverfahren an einer Gasdiffusionselektrode als Kathode (11), **dadurch gekennzeichnet, dass** das Verfahren in einer Elektrolysezelle (Z) nach einem der Ansprüche 1 bis 18 durchgeführt wird wobei der Separator (3) eine Ionenaustauschermembran ist mit den Schritten:
Einleiten des Katholyts (17), einer wässrigen Lösung enthaltend mindestens Alkalihydrogencarbonat, über den Katholytzulauf (13) in den Spalt (12) zwischen Ionenaustauschermembran (3) und Kathode (11),
Einleiten des Anolyts, einer wässrigen Lösung enthaltend mindestens Alkalihydrogencarbonat, über den Anolytzulauf (8) in den Anodenraum (15),
Einleiten des Kohlendioxidgasstroms (33) durch die erste Gaszuleitung (5) in den Gasraum (4)
Einstellen der Elektrolysespannung an den Stromleitungen (31) und (32)
Abführen des reagierten Katholyts am Katholytablauf (14),
Abführen des Anodenreaktionsprodukts bestehend aus Anolyt und Produktgas, wobei Anolyt durch den Anolytablauf (9) und Produktgas Sauerstoff und ggf. CO₂ durch die zweite Gasableitung (7) oder Anolyt und Produktgas insbesondere gemeinsam über eine Leitung (70) abgeführt werden,
Abführen des gasförmigen Kathodenreaktionsprodukts bestehend wenigstens aus CO, unverbrauchtem CO₂ und gegebenenfalls Wasserstoff über die erste Gasableitung (6) aus dem Gasraum (4)
Trennung des Gasgemisches aus CO, unverbrauchtem CO₂ und gegebenenfalls Wasserstoff in die Komponenten und Rückführung des unverbrauchten CO₂ in die erste Gaszuleitung (5),
Einstellen der Anfangskonzentration an Alkalihydrogencarbonat im abgeführten Anolyt und Katholyt, und
Rückführung des Katholyts in den Katholytzulauf (13) und Rückführung des Anolyts in den Anolytzulauf (8).

22. Verfahren zur elektrochemischen Umsetzung von CO₂ im technischen Maßstab nach dem Diaphragmaelektrolyseverfahren an einer Gasdiffusionselektrode als Kathode (11), **dadurch gekennzeichnet, dass** das Verfahren in einer Elektrolysezelle (Z) nach einem der Ansprüche 1 bis 18 durchgeführt wird wobei der Separator (3) ein Diaphragma ist, mit den Schritten:
Einleiten des Katholyts (17), einer wässrigen Lösung enthaltend mindestens Alkalihydrogencarbonat, über den Katholytzulauf (13) in den Spalt (12) zwischen Diaphragma (3) und Kathode (11),
Einleiten des Anolyts, einer wässrigen Lösung enthaltend mindestens Alkalihydrogencarbonat, über den Anolytzulauf (8) in den Anodenraum (15),
Einleiten des Kohlendioxidgasstroms (33) durch die erste Gaszuleitung (5) in den Gasraum (4)
Einstellen der Elektrolysespannung an den Stromleitungen (31) und (32) Abführen des reagierten Katholyts am Katholytablauf (14),
Abführen des Anodenreaktionsprodukts bestehend aus Anolyt und Produktgas, wobei Anolyt durch den Anolytablauf (9) und Produktgas Sauerstoff durch die zweite Gasableitung (7) oder Anolyt und Produktgas insbesondere gemeinsam über eine Leitung (70) abgeführt werden,
Abführen des gasförmigen Kathodenreaktionsprodukts bestehend wenigstens aus CO, unverbrauchtem CO₂ und gegebenenfalls Wasserstoff über die erste Gasableitung (6) aus dem Gasraum (4)
Trennung des Gasgemisches aus CO, unverbrauchtem CO₂ und gegebenenfalls Wasserstoff in die Komponenten und Rückführung des unverbrauchten CO₂ in die erste Gaszuleitung (5),
Einstellen der Anfangskonzentration an Alkalihydrogencarbonat im abgeführten Anolyt und Katholyt, und
Rückführung des Katholyts in den Katholytzulauf (13) und Rückführung des Anolyts in den Anolytzulauf (8).

23. Verfahren gemäß einem der Ansprüche 22 oder 23, **dadurch gekennzeichnet, dass** die Gasgeschwindigkeit im Gasraum nahe der Rückseite der Gasdiffusionselektrode von 0,001 bis 15 m/s, bevorzugt von 0,01 bis 10 m/s beträgt.

24. Verfahren gemäß einem der Ansprüche 21 bis 23, **dadurch gekennzeichnet, dass** die Driftgeschwindigkeit, mit der der Katholyt 17 durch den Spalt 12 von oben nach unten fließt, 0,2 cm/s bis 15 cm/s, bevorzugt 1 cm/s bis 10 cm/s beträgt.
